# EUROPÄISCHE PATENTSCHRIFT

(11) **EP 3 645 335 B1**
(45) Veröffentlichungstag und Bekanntmachung des Hinweises auf die Patenterteilung: **27.04.2022**
(21) Anmeldenummer: 18734809.9
(22) Anmeldetag: 28.06.2018
(51) Int. Cl.: B60L 53/12, B60L 50/50, H01F 3/00, H01F 3/08, H01F 38/14

(54) **SPULENEINRICHTUNG FÜR EIN KRAFTFAHRZEUG, INSBESONDERE FÜR EINEN KRAFTWAGEN**
COIL DEVICE FOR A MOTOR VEHICLE, IN PARTICULAR FOR A CAR
DISPOSITIF À BOBINE POUR UN VÉHICULE À MOTEUR, EN PARTICULIER POUR UN VÉHICULE AUTOMOBILE

(30) Priorität: 30.06.2017 DE 102017211211
(43) Veröffentlichungstag der Anmeldung: 06.05.2020
(73) Patentinhaber: Bayerische Motoren Werke Aktiengesellschaft, 80809 München (DE)
(72) Erfinder: HELM, Detlef, 94151 Mauth (DE); KRAMMER, Josef, 83607 Holzkirchen (DE); MÜLLER, Tobias, 94405 Landau (DE)
(86) Internationale Anmeldenummer: PCT/EP2018/067353
(87) Internationale Veröffentlichungsnummer: WO 2019/002433

(56) Entgegenhaltungen:
- EP-A1- 3 419 031
- DE-A1-102012 103 315
- DE-A1-102015 213 096
- DE-A1-102015 218 317
- DE-A1-102016 220 898
- DE-U1-202012 101 402

## Beschreibung

Die Erfindung betrifft eine Spuleneinrichtung für ein Kraftfahrzeug, insbesondere für einen Kraftwagen, gemäß dem Oberbegriff von Patentanspruch 1.

Eine solche Spuleneinrichtung für ein Kraftfahrzeug, insbesondere für einen Kraftwagen, ist beispielsweise bereits aus der DE 10 2013 226 830 A1 bekannt. Die Spuleneinrichtung weist ein Gehäuse mit einem Aufnahmeraum sowie wenigstens eine in dem Aufnahmeraum angeordnete Sekundärspule zur induktiven Übertragung von elektrischer Energie zum Laden eines Energiespeichers des Kraftfahrzeugs auf. Die Sekundärspule kann hierzu induktiv mit einer Primärspule zusammenwirken, indem elektrische Energie induktiv von der Primärspule auf die Sekundärspule übertragen wird. Des Weiteren umfasst die Spuleneinrichtung wenigstens ein in dem Gehäuse angeordnetes Ferritelement zum Führen, insbesondere Abschirmen, wenigstens eines Magnetfelds zur induktiven Übertragung der elektrischen Energie. Mit anderen Worten wird wenigstens ein Magnetfeld erzeugt, um die elektrische Energie von der Primärspule auf die Sekundärspule induktiv zu übertragen. Dabei wird das Ferritelement genutzt, um das Magnetfeld zu führen, insbesondere abzuschirmen.

Außerdem offenbart die DE 10 2015 213 096 A1 eine Spuleneinheit zur induktiven Energieübertragung, wobei die Spuleneinheit zumindest eine Spulenwicklung und einen Ferritkern umfasst. Dabei ist es vorgesehen, dass die zumindest eine Spulenwicklung und der Ferritkern von einer Struktur aus einem faserverstärkten Kunststoff umgeben sind. Die DE 10 2015 218 317 A1 offenbart eine Spuleneinheit zur induktiven Energieübertragung. Der DE 10 2015 213 096 A1 ist eine Spuleneinheit als bekannt zu entnehmen. Die DE 20 2012 101 402 U1 offenbart eine Spuleneinheit zur induktiven Übertragung elektrischer Energie. Aus der DE 10 2016 220 898 A1 ist eine kontaktlose Leistungsübertragungseinheit bekannt. Der EP 3 419 031 A1 ist eine Spuleneinheit als bekannt zu entnehmen. Außerdem offenbart die DE 10 2012 103 315 A1 eine Spuleneinheit.

Aufgabe der vorliegenden Erfindung ist es, eine Spuleneinrichtung der eingangs genannten Art zu schaffen, sodass eine besonders hohe Robustheit der Spuleneinrichtung realisierbar ist.

Diese Aufgabe wird erfindungsgemäß durch eine Spuleneinrichtung mit den Merkmalen des Patentanspruchs 1 gelöst. Vorteilhafte Weiterbildungen der Erfindung lassen sich den übrigen Ansprüchen entnehmen.

Um eine Spuleneinrichtung der eingangs genannten Art zu schaffen, sodass die Spuleneinrichtung eine besonders hohe Robustheit aufweist, ist es erfindungsgemäß vorgesehen, dass das Ferritelement wenigstens zwei Ferritbereiche aufweist, die zumindest teilweise über wenigstens eine zwischen den Ferritbereichen angeordnete Durchgangsöffnung voneinander beabstandet sind. Mit anderen Worten weist das Ferritelement die Durchgangsöffnung auf, welche zumindest zwischen jeweiligen Teilbereichen der Ferritbereiche angeordnet ist. Dadurch sind die Ferritbereiche zumindest im Bereich der Durchgangsöffnung voneinander beabstandet. Mit anderen Worten ist durch die Durchgangsöffnung ein Abstand zwischen den Ferritbereichen gebildet.

Die Spuleneinrichtung umfasst dabei wenigstens eine Abstützstruktur, welche zumindest teilweise in dem genannten Abstand beziehungsweise in der Durchgangsöffnung angeordnet ist, wobei die Abstützstruktur die Durchgangsöffnung beispielsweise, insbesondere vollständig, durchdringt. Über die Abstützstruktur sind gegenüberliegende Gehäuseelemente des Gehäuses aneinander abgestützt. Dies bedeutet, dass beispielsweise ein erstes der Gehäuseelemente auf einer ersten Seite des Ferritelements angeordnet ist, wobei ein zweites der Gehäuseelemente auf einer der ersten Seite abgewandten zweiten Seite des Ferritelements angeordnet ist. Die Abstützstruktur kann sich dabei beispielsweise von einer der Seiten auf die andere Seite durch die Durchgangsöffnung hindurch erstrecken, sodass die Gehäuseelemente über die Abstützstruktur aneinander abgestützt sind. Durch diese Abstützung der Gehäuseelemente können beispielsweise auf eines der Gehäuseelemente wirkende Kräfte durch das eine Gehäuseelement aufgenommen und, insbesondere unter Umgehung des Ferritelements, über die Abstützstruktur auf das jeweils andere Gehäuseelement übertragen werden, ohne dass es zu aus diesen Kräften resultierenden, übermäßigen Krafteinwirkungen auf das Ferritelement beziehungsweise die Ferritbereiche kommt. Dadurch wird das Ferritelement vor übermäßigen, insbesondere äußeren, Krafteinwirkungen sicher geschützt.

Das Ferritelement und somit die Ferritbereiche sind aus Ferrit gebildet, sodass das Ferritelement beziehungsweise die Ferritbereiche üblicherweise spröde und recht hart ist beziehungsweise sind. Somit ist das Ferritelement an sich bruchgefährdet, insbesondere wenn es zu einer Zug- und/oder Biegebelastung kommt. Das Ferritelement wird zur Führung, insbesondere zur Abschirmung, des Magnetfelds genutzt. Bricht das Ferritelement und/oder wird das Ferritelement anderweitig beschädigt oder zerstört, so wird dadurch die gewünschte Funktion des Ferritelements hinsichtlich der Führung beziehungsweise Abschirmung des Magnetfelds negativ beeinträchtigt, wodurch auch eine effiziente induktive Energieübertragung beeinträchtigt wird.

Da nun die Gehäuseelemente auf die beschriebene Weise von außen auf das Gehäuse einwirkende Kräfte besonders vorteilhaft aufnehmen und verteilen können, ohne dass es zu einer übermäßigen Belastung des Ferritelements kommt, kann die Wahrscheinlichkeit, dass es zu einer Beschädigung, insbesondere zu einem Bruch, des Ferritelements kommt, besonders gering gehalten werden. Zu einer solchen äußeren, auf das Gehäuse beziehungsweise die Gehäuseelemente wirkenden Krafteinwirkung kommt es beispielsweise dann, wenn ein Objekt, welches zunächst auf einer Fahrbahn, entlang welcher das Kraftfahrzeug gefahren wird, angeordnet ist, gegen das Gehäuse und somit gegen eines der Gehäuseelemente prallt. Ferner können beispielsweise auch anderweitige, in dem Aufnahmeraum angeordnete Komponenten wie eine Leistungselektronik und/oder die Sekundärspule mittels der Abstützstruktur vor übermäßigen Krafteinwirkungen geschützt werden. Da die Abstützstruktur in dem Aufnahmeraum aufgenommen ist, ist die Abstützstruktur in das Gehäuse integriert, sodass der Bauraumbedarf der Spuleneinrichtung besonders gering gehalten werden kann. Ferner ist es beispielsweise durch die integrierte Abstützstruktur möglich, ohnehin vorhandenen Bauraum zur Abstützung der Gehäuseelemente zu nutzen, sodass der Bauraumbedarf, die Teileanzahl und das Gewicht der Spuleneinrichtung in einem besonders geringen Rahmen gehalten werden können.

Die Abstützstruktur ist dabei aus dem Faserverbundwerkstoff gebildet, welche vorzugsweise elektrisch nicht-leitend und magnetisch permeabel ist. Der Faserverbundwerkstoff umfasst Verstärkungsfasern sowie eine Matrix, in welche die Verstärkungsfasern eingebettet sind. Die Matrix ist dabei vorzugsweise aus einem Kunststoff gebildet. Als die Verstärkungsfasern können beispielsweise Glasfasern, Basaltfasern, Aramidfasern, Kohlefasern und/oder andere Fasern verwendet werden.

In weiterer Ausgestaltung der Erfindung ist der Aufnahmeraum in Fahrzeughochrichtung nach oben hin durch ein erstes der Gehäuseelemente und in Fahrzeughochrichtung nach unten hin durch ein zweites der Gehäuseelemente zumindest teilweise, insbesondere zumindest überwiegend oder vollständig, begrenzt. Das erste Gehäuseelement ist somit beispielsweise ein Deckel oder Deckelelement, wobei beispielsweise das zweite Gehäuseelement ein Boden des Gehäuses ist. Dieser Ausführungsform liegt die Erkenntnis zugrunde, dass insbesondere auf den Boden beziehungsweise das zweite Gehäuseelement Kräfte von außen wirken können, die daraus resultieren, dass Objekte von außen gegen das Gehäuse prallen. Durch die Abstützstruktur können Kräfte besonders vorteilhaft aufgenommen und verteilt werden, wodurch eine besonders hohe Robustheit darstellbar ist.

In weiterer Ausgestaltung der Erfindung ist das Gehäuse in Fahrzeughochrichtung nach oben hin zumindest teilweise, insbesondere zumindest überwiegend oder vollständig, durch ein weiteres Bauelement des Kraftfahrzeugs überdeckt.

Dabei hat es sich als besonders vorteilhaft gezeigt, wenn das Gehäuse in Fahrzeughochrichtung nach oben hin direkt an dem weiteren Bauelement abgestützt ist, um eine bauraumgünstige und stabile Abstützung zu schaffen.

Eine weitere Ausgestaltung sieht vor, dass in Fahrzeughochrichtung zwischen dem Gehäuse und dem weiteren Bauelement ein Luftspalt vorgesehen ist. Somit wird beispielsweise bei einer auf das Gehäuse, insbesondere in Fahrzeughochrichtung von unten nach oben, wirkenden Krafteinwirkung das Gehäuse beispielsweise als Starrkörper nach oben verschoben, bis das Gehäuse beziehungsweise der Starrkörper in Anlage mit dem darüber angeordneten Bauelement kommt. In der Folge kann die Krafteinwirkung besonders vorteilhaft an dem Bauelement abgestützt werden.

Um die Teileanzahl und somit die Kosten besonders gering halten zu können, ist es in weiterer Ausgestaltung der Erfindung vorgesehen, dass die Ferritbereiche einstückig miteinander ausgebildet sind. Die Durchgangsöffnung ist somit ein Durchgangsloch, welches die einstückigen Ferritbereiche durchdringt und somit beispielsweise in seiner Umfangsrichtung vollständig umlaufend durch die jeweiligen Ferritbereiche begrenzt ist.

Eine weitere Ausführungsform zeichnet sich dadurch aus, dass die Ferritbereiche durch separat voneinander ausgebildete Ferritteile des Ferritelements gebildet sind, sodass beispielsweise das Ferritelement aus den Ferritteilen zusammengesetzt ist.

In weiterer Ausgestaltung der Erfindung sind die jeweiligen ferritischen Elemente aus Pulver gebildet, welches in dem Faserverbundwerkstoff, insbesondere dessen Matrix, eingebettet ist.

Alternativ oder zusätzlich weist das jeweilige ferritische Element beispielsweise zumindest eine Folie auf.

Die auch als Stützstruktur bezeichnete Abstützstruktur ist beispielsweise aus einer Mischung aus dem magnetisch permeablen Faserverbundwerkstoff und Ferrit gebildet, sodass beispielsweise auch die Abstützstruktur Eigenschaften zum Führen, insbesondere Abschirmen, des Magnetfelds aufweist. Dadurch kann das Magnetfeld auch im Bereich der Durchgangsöffnung besonders vorteilhaft geführt beziehungsweise abgeschirmt werden, und zwar beispielsweise mittels der Abstützstruktur beziehungsweise mittels der ferritischen Elemente.

In weiterer Ausgestaltung der Erfindung ist wenigstens eine Federeinrichtung vorgesehen, über welche die Abstützstruktur an wenigstens einem der Gehäuseelemente abgestützt ist. Die Federeinrichtung ist beispielsweise durch federnde Elemente gebildet, welche beispielsweise bei einer äußeren Krafteinwirkung auf das Gehäuse sich elastisch verformen und dadurch Energie abbauen. Dies kann je nach Anwendungsfall in unterschiedlicher Art und Weise realisiert werden.

Ferner ist es denkbar, dass die Gehäuseelemente und die Abstützstruktur aus dem gleichen Werkstoff, insbesondere aus dem Faserverbundwerkstoff, gebildet sind, sodass beispielsweise die Abstützstruktur oder wenigstens ein Teil der Abstützstruktur einstückig mit den Gehäuseelementen beziehungsweise mit zumindest einem der Gehäuseelemente ausgebildet ist.

Einzelheiten der Erfindung ergeben sich im Weiteren anhand der Figurenbeschreibung sowie der Zeichnungen. Hierbei zeigt:
- Fig. 1: ausschnittsweise eine schematische und geschnittene Seitenansicht einer Spuleneinrichtung gemäß einer ersten Ausführungsform für ein Kraftfahrzeug, mit einem Ferritelement mit wenigstens zwei Ferritbereichen, und mit einer Abstützstruktur, welche zumindest teilweise in einer Durchgangsöffnung zwischen den Ferritbereichen angeordnet ist;
- Fig. 2: ausschnittsweise eine schematische und geschnittene Seitenansicht der Spuleneinrichtung gemäß einer zweiten Ausführungsform;
- Fig. 3: ausschnittsweise eine schematische Draufsicht der Spuleneinrichtung gemäß einer dritten Ausführungsform; und
- Fig. 4: ausschnittsweise eine schematische Draufsicht der Spuleneinrichtung gemäß einer vierten Ausführungsform.

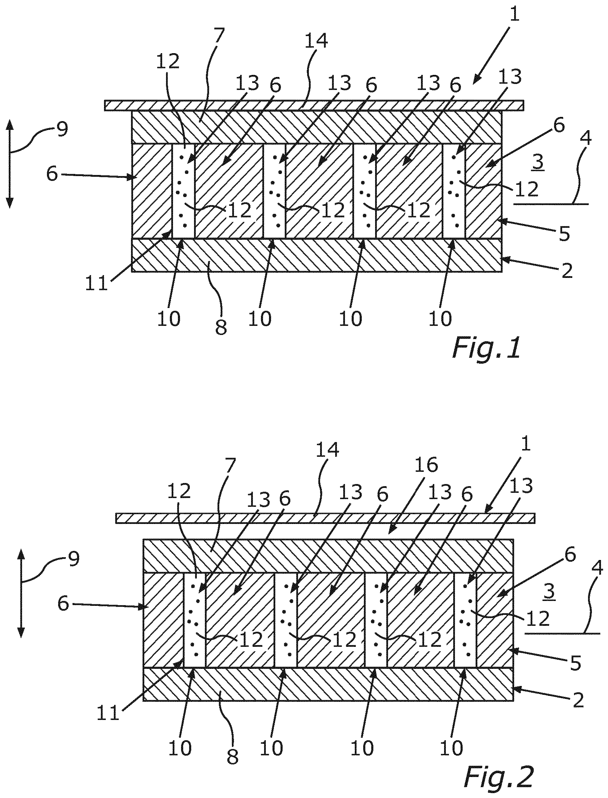

In Fig. 1 ist in einer ausschnittsweisen und geschnittenen Seitenansicht eine Spuleneinrichtung 1 für ein Kraftfahrzeug, insbesondere für einen Kraftwagen wie beispielsweise einen Personenkraftwagen, gezeigt. Die Spuleneinrichtung 1 umfasst ein Gehäuse 2 mit einem Aufnahmeraum 3. Die Spuleneinrichtung 1 umfasst ferner wenigstens eine in Fig. 1 ausschnittsweise und besonders schematisch dargestellte Sekundärspule 4, mittels welcher elektrische Energie zum Laden eines Energiespeichers des Kraftfahrzeugs induktiv übertragen werden kann. Das Kraftfahrzeug ist beispielsweise als Hybrid- oder Elektrofahrzeug ausgebildet und weist wenigstens eine elektrische Maschine auf, mittels welcher wenigstens ein Rad des Kraftfahrzeugs beziehungsweise das Kraftfahrzeug insgesamt elektrisch angetrieben werden kann. Hierzu ist die elektrische Maschine in einem Motorbetrieb und somit als Elektromotor betreibbar. Um die elektrische Maschine in dem Motorbetrieb zu betreiben, wird die elektrische Maschine mit in dem Energiespeicher gespeicherter elektrischer Energie versorgt. Hierdurch nimmt eine in dem Energiespeicher gespeicherte Menge an elektrischer Energie ab. Um die in dem Energiespeicher gespeicherte Menge an elektrischer Energie zu vergrößern, wird der beispielsweise als Batterie, insbesondere als Hochvolt-Batterie (HV-Batterie), ausgebildete Energiespeicher geladen. Zu diesem Zweck stellt beispielsweise eine Energiequelle elektrische Energie über eine Primärspule bereit. Die Primärspule ist beispielsweise an einem Boden angeordnet, auf welchem das Kraftfahrzeug über seine Räder abgestützt ist. Beispielsweise ist der Boden als Garagenboden, Parkplatzboden oder dergleichen ausgebildet. Die Sekundärspule 4 kann mit der Primärspule induktiv und somit berührungslos derart zusammenwirken, dass die von der Energiequelle über die Primärspule bereitgestellte elektrische Energie induktiv von der Primärspule auf die Sekundärspule übertragen wird. Von der Sekundärspule kann die elektrische Energie zu dem Energiespeicher geführt und in dem Energiespeicher gespeichert werden, wodurch der Energiespeicher geladen wird.

Die Spuleneinrichtung 1 ist beispielsweise im Bereich eines Unterbodens beziehungsweise an einem Unterboden des Kraftfahrzeugs angeordnet, dessen Unterboden beispielsweise durch einen Boden eines Aufbaus, insbesondere einer selbsttragenden Karosserie, des Kraftfahrzeugs gebildet wird. Beispielsweise ist die Spuleneinrichtung 1 in den Unterboden integriert.

Die Spuleneinrichtung 1 umfasst ferner wenigstens ein in dem Gehäuse 2, insbesondere in dem Aufnahmeraum 3, angeordnetes Ferritelement 5 zum Führen, insbesondere Abschirmen, wenigstens eines Magnetfelds zur induktiven Übertragung der elektrischen Energie auf. Mit anderen Worten wird zur induktiven Übertragung der elektrischen Energie wenigstens ein Magnetfeld erzeugt, welches mittels des Ferritelements 5 geführt beziehungsweise abgeschirmt werden kann.

Aus Fig. 1 ist erkennbar, dass das Ferritelement 5 Ferritbereiche 6 aufweist, die einstückig miteinander ausgebildet oder durch separat voneinander gebildete Ferritteile des Ferritelements 5 gebildet sein können.

Des Weiteren weist das Gehäuse 2 ein erstes Gehäuseelement 7 und ein gegenüberliegendes, zweites Gehäuseelement 8 auf. Der Aufnahmeraum 3 ist dabei bezogen auf eine Einbaulage der Spuleneinrichtung 1 in Fahrzeughochrichtung nach oben hin zumindest teilweise, insbesondere zumindest überwiegend oder vollständig, durch das Gehäuseelement 7 begrenzt. Bezogen auf die Einbaulage ist der Aufnahmeraum 3 in Fahrzeughochrichtung nach unten hin zumindest teilweise, insbesondere zumindest überwiegend oder vollständig, durch das Gehäuseelement 8 begrenzt. In Fahrzeughochrichtung zwischen den Gehäuseelementen 7 und 8 sind das Ferritelement 5 und die Sekundärspule 4 angeordnet, sodass das Gehäuseelement 7 auf einer in Fahrzeughochrichtung nach oben weisenden ersten Seite des Ferritelements 5 und das Gehäuseelement 8 auf einer in Fahrzeughochrichtung nach unten weisenden und der ersten Seite in Fahrzeughochrichtung gegenüberliegenden beziehungsweise abgewandten zweiten Seite des Ferritelements 5 angeordnet ist. Dabei nimmt die Spuleneinrichtung 1 ihre Einbaulage in vollständig hergestelltem Zustand des Kraftfahrzeugs ein, wobei die Fahrzeughochrichtung in Fig. 1 durch einen Doppelpfeil 9 veranschaulicht ist.

Um nun auf bauraum- und kostengünstige Weise eine besonders hohe Robustheit der Spuleneinrichtung 1 zu schaffen, sind die jeweiligen Ferritbereiche 6 des Ferritelements 5 über jeweilige, zwischen den Ferritbereichen 6 angeordnete Durchgangsöffnungen 10 voneinander beabstandet. Die Durchgangsöffnungen 10 sind somit zwischen den jeweiligen Ferritbereichen 6 angeordnet. Außerdem ist in dem Aufnahmeraum 3 eine auch als Stützstruktur bezeichnete Abstützstruktur 11 angeordnet, welche zumindest teilweise in den Durchgangsöffnungen angeordnet ist.

Fig. 1 zeigt eine erste Ausführungsform, bei welcher die Abstützstruktur 11 mehrere Abstützelemente 12 aufweist. Die Abstützelemente 12 sind in den jeweiligen Durchgangsöffnungen 11 zumindest teilweise, insbesondere zumindest überwiegend oder vollständig, aufgenommen und durchdringen die Durchgangsöffnungen 10, insbesondere in Fahrzeughochrichtung. Dabei sind die einander gegenüberliegenden Gehäuseelemente 7 und 8 über die Abstützstruktur 11, insbesondere über die Abstützelemente 12, aneinander abgestützt, insbesondere in Fahrzeughochrichtung. Die Abstützelemente 12 können einstückig miteinander ausgebildet sein. Alternativ ist es denkbar, dass die Abstützelemente 12 als separat voneinander ausgebildete Bauteile ausgebildet sind.

Die Abstützstruktur 11 und somit die Abstützelementen 12 sind dabei aus einem Faserverbundwerkstoff gebildet und weisen ferritische Elemente auf, welche beispielsweise in den Faserverbundwerkstoff, insbesondere in dessen Matrix, eingebettet sind. Der Faserverbundwerkstoff umfasst eine Mehrzahl von Verstärkungsfasern und die genannte Matrix, die beispielsweise aus einem Kunststoff gebildet und somit als Kunststoffmatrix ausgebildet ist. Dabei sind die Verstärkungsfasern zumindest teilweise, insbesondere zumindest überwiegend oder vollständig, in die Matrix eingebettet. Ferner sind beispielsweise die ferritischen Elemente in die Matrix eingebettet, wobei die ferritischen Elemente beispielsweise durch ein Pulver, das heißt durch ein Ferritpulver, gebildet sind und/oder jeweils wenigstens eine Folie aufweisen.

Bei der in Fig. 1 gezeigten ersten Ausführungsform sind die ferritischen Elemente durch ein Pulver gebildet und somit als Partikel ausgebildet, die in Fig. 1 mit 13 bezeichnet sind. Da die ferritischen Elemente in den Faserverbundwerkstoff eingebettet sind und diese in den Durchgangsöffnungen 10 angeordnet ist, sind die ferritischen Elemente in den Durchgangsöffnungen 10 angeordnet. Die ferritischen Elemente verleihen der Abstützstruktur 11 eine Fähigkeit hinsichtlich des Führens, insbesondere Abschirmens, des genannten magnetischen Felds, sodass das magnetische Feld auch im Bereich der Durchgangsöffnungen 10 besonders vorteilhaft geführt werden kann. Dadurch kann die elektrische Energie besonders effizient induktiv übertragen werden. Gleichzeitig kann eine besonders hohe, insbesondere mechanische, Robustheit realisiert werden, da über die Abstützstruktur 11 besonders vorteilhaft auf das Gehäuse 2 einwirkende Kräfte aufgenommen und verteilt werden können.

Kommt es beispielsweise zu einer äußeren, auf das Gehäuseelement 8 wirkenden Krafteinwirkung, so kann diese Krafteinwirkung von dem Gehäuseelement 8 aufgenommen und auf die Abstützstruktur 11 übertragen werden. Über die Abstützstruktur 11 kann die Krafteinwirkung auf das Gehäuseelement 7 übertragen werden, ohne dass es zu einer übermäßigen Krafteinwirkung auf das Ferritelement 5 und die Sekundärspule 4 kommt. Insbesondere kann das Gehäuseelement 8 über die Abstützstruktur 11 zumindest im Wesentlichen direkt an dem Gehäuseelement 7 abgestützt werden, sodass Bauteile, die sich zwischen dem unteren Gehäuseelement 8 und dem oberen Gehäuseelement 7 befinden, geschützt werden. Die Abstützstruktur 11 ist somit eine integrierte Stützstruktur, durch welche insbesondere das Ferritelement 5 effektiv geschützt werden kann. Gleichzeitig kann eine vorteilhafte Abschirmung und Lenkung des Magnetfelds durch die Zugabe der ferritischen Elemente in der Abstützstruktur 11 gewährleistet werden.

Insgesamt ist erkennbar, dass die Abstützstruktur 11 eine Stützstruktur aus nichtleitendem magnetisch permeablem Faserverbundwerkstoff ist. Die Gehäuseelemente 7 und 8 sind beispielsweise Gehäusestrukturen, die punktuell im Bereich der Ferritbereiche 6 über die Abstützstruktur 11 miteinander verbunden sind. Über die Abstützstruktur 11 können Kräfte besonders vorteilhaft verteilt und abgeleitet werden. Die ferritischen Elemente haben insbesondere magnetische Eigenschaften, mittels welchen magnetischen Eigenschaften der Spuleneinrichtung 1 insgesamt im Bereich der Durchgangsöffnungen 10 verbessert werden können, insbesondere im Vergleich zu einem Zustand, in welchem beispielsweise in den Durchgangsöffnungen 10 lediglich Luft aufgenommen ist. Außerdem ist das Gehäuse 2 in Fahrzeughochrichtung nach oben hin zumindest teilweise, insbesondere zumindest überwiegend oder vollständig, durch ein weiteres Bauelement 14 des Kraftfahrzeugs überdeckt. Das Bauelement 14 ist beispielsweise Teil des genannten Unterbodens, sodass das Bauelement 14 beispielsweise ein Unterbodenelement des Unterbodens ist. Bei der in Fig. 1 veranschaulichten ersten Ausführungsform ist das Gehäuse 2 in Fahrzeughochrichtung nach oben hin direkt an dem weiteren Bauelement 14 abgestützt, sodass beispielsweise das Gehäuse 2, insbesondere das Gehäuseelement 7, das weitere Bauelement 14 berührt.

Fig. 2 zeigt eine zweite Ausführungsform der Spuleneinrichtung 1. Die zweite Ausführungsform unterscheidet sich insbesondere dadurch von der ersten Ausführungsform, dass das Gehäuse 2 in Fahrzeughochrichtung nach oben hin nicht direkt an dem weiteren Bauelement 14 abgestützt ist, sondern in Fahrzeughochrichtung zwischen dem Gehäuse 2 und dem weiteren Bauelement 14 ist ein Luftspalt 16 vorgesehen. Wirkt beispielsweise eine Kraft in Fahrzeughochrichtung von unten nach oben auf das Gehäuse 2, insbesondere über das Gehäuseelement 8, so wird beispielsweise zunächst das Gehäuse 2 mit den darin angeordneten Komponenten, insbesondere als starrer Körper, in Fahrzeughochrichtung nach oben verlagert und somit auf das Bauelement 14 zu bewegt. In der Folge kommt das Gehäuse 2, insbesondere das Gehäuseelement 7, in direkte Stützanlage mit dem Bauelement 14, sodass daraufhin die auf das Gehäuseelement 8 wirkende und somit über das Gehäuseelement 8 in das Gehäuse 2 eingeleitete Kraft über die Abstützstruktur 11 und das Gehäuseelement 7 auf das Bauelement 14 abgeleitet wird. Die Abstützstruktur 11 wird dabei genutzt, um die von außen auf die Spuleneinrichtung 1 wirkende Kraft durch das Ferritelement 5 hindurchzuführen.

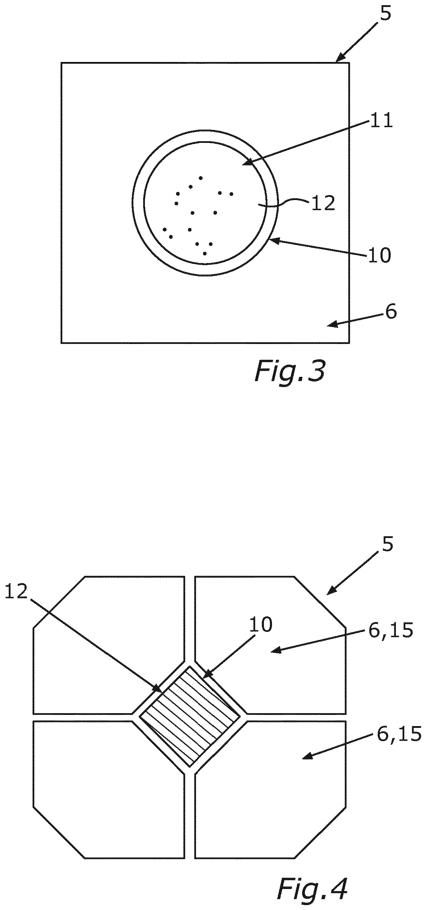

Fig. 3 zeigt eine dritte Ausführungsform, bei welcher die Ferritbereiche 6 einstückig miteinander ausgebildet sind. Die jeweilige Durchgangsöffnung 10 ist somit als Loch ausgebildet, das das beispielsweise einstückige Ferritelement 5 durchdringt.

Fig. 4 veranschaulicht schließlich eine vierte Ausführungsform, bei welcher die Ferritbereiche 6 als separat voneinander ausgebildete Ferritteile 15 ausgebildet sind. Das Ferritelement 5 ist somit als mehrteiliger Ferrit ausgebildet, wobei die einzelnen Ferritteile 15 so angeordnet sind, dass die Abstützstruktur 11 zwischen den Ferritteilen 15 die Gehäuseelemente 7 und 8 auf die beschriebene Weise aneinander abstützen kann. Ferner sind unterschiedliche außenumfangsseitige Formen der Abstützelemente 12 denkbar. Das jeweilige Abstützelement 12 kann beispielsweise außenumfangsseitig beziehungsweise im Querschnitt rund, insbesondere kreisrund, oder aber eckig, insbesondere rechteckig oder quadratisch, ausgebildet sein. Dadurch, dass die ferritischen Elemente in den Faserverbundwerkstoff, insbesondere dessen Matrix, eingebettet sind, weist die Abstützstruktur 11 beispielsweise eine Mischung aus magnetisch permeablem Faserverbundwerkstoff, insbesondere Matrix, und ferritischen Elementen auf, wobei diese Mischung eine Optimierung der Führung beziehungsweise Abschirmung des Magnetfelds trotz des Vorhandenseins der beispielsweise als Spalte ausgebildeten Durchgangsöffnungen 10 zwischen den Ferritbereichen 6 darstellbar ist.

### Bezugszeichenliste

- 1: Spuleneinrichtung
- 2: Gehäuse
- 3: Aufnahmeraum
- 4: Sekundärspule
- 5: Ferritelement
- 6: Ferritbereich
- 7: Gehäuseelement
- 8: Gehäuseelement
- 9: Doppelpfeil
- 10: Durchgangsöffnung
- 11: Abstützstruktur
- 12: Abstützelement
- 13: Partikel
- 14: weiteres Bauelement
- 15: Ferritteil
- 16: Luftspalt

## Patentansprüche

1. Spuleneinrichtung (1) für ein Kraftfahrzeug, mit einem Gehäuse (2), welches einen Aufnahmeraum (3) aufweist, mit wenigstens einer in dem Aufnahmeraum (3) angeordneten Sekundärspule (4) zur induktiven Übertragung von elektrischer Energie zum Laden eines Energiespeichers des Kraftfahrzeugs, und mit wenigstens einem in dem Gehäuse (2) angeordneten Ferritelement (5) zum Führen wenigstens eines Magnetfelds zur induktiven Übertragung der elektrischen Energie,
**dadurch gekennzeichnet, dass**
das Ferritelement (5) wenigstens zwei Ferritbereiche (6) aufweist, welche zumindest teilweise über wenigstens eine zwischen den Ferritbereichen (6) angeordnete Durchgangsöffnung (10) voneinander beabstandet sind, in welcher eine aus einem Faserverbundwerkstoff gebildete und in dem Faserverbundwerkstoff aufgenommene ferritische Elemente (13) aufweisenden Abstützstruktur (11) zumindest teilweise angeordnet ist, über welche gegenüberliegenden Gehäuseelemente (7, 8) des Gehäuses (2) aneinander abgestützt sind.

2. Spuleneinrichtung (1) nach Anspruch 1,
**dadurch gekennzeichnet, dass**
der Aufnahmeraum (3) in Fahrzeughochrichtung nach oben hin durch ein erstes der Gehäuseelemente (7, 8) und in Fahrzeughochrichtung nach unten hin durch ein zweites der Gehäuseelemente (7, 8) zumindest teilweise begrenzt ist.

3. Spuleneinrichtung (1) nach Anspruch 1 oder 2,
**dadurch gekennzeichnet, dass**
das Gehäuse (2) in Fahrzeughochrichtung nach oben hin zumindest teilweise durch ein weiteres Bauelement (14) des Kraftfahrzeugs überdeckt ist.

4. Spuleneinrichtung (1) nach Anspruch 3,
**dadurch gekennzeichnet, dass**
das Gehäuse (2) in Fahrzeughochrichtung nach oben hin direkt an dem weiteren Bauelement (14) abgestützt ist.

5. Spuleneinrichtung (1) nach Anspruch 3,
**dadurch gekennzeichnet, dass**
in Fahrzeughochrichtung zwischen dem Gehäuse (2) und dem weiteren Bauelement (14) ein Luftspalt (16) vorgesehen ist.

6. Spuleneinrichtung (1) nach einem der vorhergehenden Ansprüche,
**dadurch gekennzeichnet, dass**
die Ferritbereiche (6) einstückig miteinander ausgebildet sind.

7. Spuleneinrichtung (1) nach einem der Ansprüche 1 bis 5,
**dadurch gekennzeichnet, dass**
die Ferritbereiche (6) durch separat voneinander ausgebildete Ferritteile (15) des Ferritelements (5) gebildet sind.

8. Spuleneinrichtung (1) nach einem der vorhergehenden Ansprüche,
**dadurch gekennzeichnet, dass**
die jeweiligen ferritischen Elemente (13) aus Pulver gebildet sind, welches in den Faserverbundwerkstoff eingebettet ist.

9. Spuleneinrichtung (1) nach einem der vorhergehenden Ansprüche,
**dadurch gekennzeichnet, dass**
das jeweilige ferritische Element (13) zumindest eine Folie aufweist.

10. Spuleneinrichtung (1) nach einem der vorhergehenden Ansprüche,
**dadurch gekennzeichnet, dass**
wenigstens eine Federeinrichtung vorgesehen ist, über welche die Abstützstruktur (11) an wenigstens einem der Gehäuseelemente (7, 8) abgestützt ist.

## Claims

1. Coil device (1) for a motor vehicle, having a housing (2) which has a receiving space (3), having at least one secondary coil (4) which is arranged in the receiving space (3) for the inductive transmission of electric energy for charging an energy store of the motor vehicle, and having at least one ferrite element (5) which is arranged in the housing (2) for conducting at least one magnetic field for the inductive transmission of the electric energy, **characterized in that** the ferrite element (5) has at least two ferrite regions (6) which are spaced apart from one another at least partially via at least one through opening (10) which is arranged between the ferrite regions (6) and in which a supporting structure (11) is at least partially arranged which is formed from a fiber composite material, has ferritic elements (13) which are received in the fiber composite material, and via which opposite housing elements (7, 8) of the housing (2) are supported on one another.

2. Coil device (1) according to Claim 1, **characterized in that** the receiving space (3) is delimited at least partially in the vehicle vertical direction toward the top by way of a first one of the housing elements (7, 8) and in the vehicle vertical direction toward the bottom by way of a second one of the housing elements (7, 8).

3. Coil device (1) according to Claim 1 or 2, **characterized in that** the housing (2) is covered in the vehicle vertical direction toward the top at least partially by way of a further component (14) of the motor vehicle.

4. Coil device (1) according to Claim 3, **characterized in that** the housing (2) is supported directly on the further component (14) in the vehicle vertical direction toward the top.

5. Coil device (1) according to Claim 3, **characterized in that** an air gap (16) is provided in the vehicle vertical direction between the housing (2) and the further component (14).

6. Coil device (1) according to one of the preceding claims, **characterized in that** the ferrite regions (6) are configured in one piece with one another.

7. Coil device (1) according to one of Claims 1 to 5, **characterized in that** the ferrite regions (6) are formed by way of ferrite parts (15) of the ferrite element (5) which are configured separately from one another.

8. Coil device (1) according to one of the preceding claims, **characterized in that** the respective ferritic elements (13) are formed from powder which is embedded into the fiber composite material.

9. Coil device (1) according to one of the preceding claims, **characterized in that** the respective ferritic element (13) has at least one foil.

10. Coil device (1) according to one of the preceding claims, **characterized in that** at least one spring device is provided, via which the supporting structure (11) is supported on at least one of the housing elements (7, 8).

## Revendications

1. Dispositif à bobine (1) pour un véhicule automobile, comprenant un boîtier (2), qui présente un espace de réception (3), comprenant au moins une bobine secondaire (4) agencée dans l'espace de réception (3) pour la transmission inductive d'énergie électrique pour charger un accumulateur d'énergie du véhicule automobile, et comprenant au moins un élément en ferrite (5) agencé dans le boîtier (2) pour guider au moins un champ magnétique pour la transmission inductive de l'énergie électrique,
**caractérisé en ce que**
l'élément en ferrite (5) présente au moins deux zones en ferrite (6), qui sont au moins partiellement espacées l'une de l'autre par l'intermédiaire d'au moins une ouverture de passage (10) agencée entre les zones en ferrite (6), dans laquelle est agencée au moins partiellement une structure d'appui (11) formée d'un matériau composite fibreux et présentant des éléments ferritiques (13) reçus dans le matériau composite fibreux, par l'intermédiaire de laquelle des éléments de boîtier opposés (7, 8) du boîtier (2) s'appuient les uns sur les autres.

2. Dispositif à bobine (1) selon la revendication 1, **caractérisé en ce que** l'espace de réception (3) est délimité au moins partiellement vers le haut dans la direction verticale du véhicule par un premier des éléments de boîtier (7, 8) et vers le bas dans la direction verticale du véhicule par un deuxième des éléments de boîtier (7, 8).

3. Dispositif à bobine (1) selon la revendication 1 ou 2, **caractérisé en ce que** le boîtier (2) est au moins partiellement recouvert vers le haut dans la direction verticale du véhicule par un autre composant (14) du véhicule automobile.

4. Dispositif à bobine (1) selon la revendication 3, **caractérisé en ce que** le boîtier (2) s'appuie directement sur l'autre composant (14) vers le haut dans la direction verticale du véhicule.

5. Dispositif à bobine (1) selon la revendication 3, **caractérisé en ce qu'**un entrefer (16) est prévu entre le boîtier (2) et l'autre composant (14) dans la direction verticale du véhicule.

6. Dispositif à bobine (1) selon l'une quelconque des revendications précédentes, **caractérisé en ce que** les zones en ferrite (6) sont formées d'un seul tenant les unes avec les autres.

7. Dispositif à bobine (1) selon l'une quelconque des revendications 1 à 5, **caractérisé en ce que** les zones en ferrite (6) sont formées par des parties en ferrite (15) de l'élément en ferrite (5) réalisées séparément les unes des autres.

8. Dispositif à bobine (1) selon l'une quelconque des revendications précédentes, **caractérisé en ce que** les éléments ferritiques respectifs (13) sont formés de poudre, qui est incorporée dans le matériau composite fibreux.

9. Dispositif à bobine (1) selon l'une quelconque des revendications précédentes, **caractérisé en ce que** chaque élément ferritique (13) présente au moins une feuille.

10. Dispositif à bobine (1) selon l'une quelconque des revendications précédentes, **caractérisé en ce qu'**au moins un dispositif à ressort est prévu, par l'intermédiaire duquel la structure d'appui (11) s'appuie sur au moins l'un des éléments de boîtier (7, 8) .
